# EUROPEAN PATENT SPECIFICATION

(11) **EP 3 088 910 B1**
(45) Date of publication and mention of the grant of the patent: **28.02.2018**
(21) Application number: 16162944.9
(22) Date of filing: 30.03.2016
(51) Int. Cl.: G01S 3/782, G06T 7/00, G06K 9/00, G06T 7/20, G01S 3/786

(54) **METHOD AND SYSTEM FOR TRACKING MOVING TRAJECTORY BASED ON HUMAN FEATURES**
VERFAHREN UND SYSTEM ZUR VERFOLGUNG EINER BEWEGTEN BAHN BASIEREND AUF MENSCHLICHEN MERKMALEN
PROCÉDÉ ET SYSTÈME DE SUIVI DE TRAJECTOIRE DE DÉPLACEMENT SUR LA BASE DE CARACTÉRISTIQUES HUMAINES

(30) Priority: 29.04.2015 CN 201510211049
(43) Date of publication of application: 02.11.2016
(73) Proprietor: Protruly Vision Technology Group Co., Ltd., Nanjing Jiangsu 210000 (CN)
(72) Inventor: Gang, Long, Nanjing (CN); LinWei, Long, Nanjing (CN)
(74) Representative: Grzelak, Anna

(56) References cited:
- US-A- 5 812 193
- US-A1- 2008 043 101
- US-A1- 2009 128 647
- US-B1- 6 476 859

## Description

### TECHNICAL FIELD

The present invention relates to the field of intelligent transportation, in particular to a method and system for tracking a moving trajectory based on human features.

### BACKGROUND OF THE PRESENT INVENTION

The tracking of a human moving trajectory integrates advanced technologies of the fields of image collection, detection of moving objects, pattern identification, automatic control and the like, and is mainly applied to intelligent safety monitoring, human-machine interfaces and detailed analysis of human movement. Especially after the United States experiences 911 terrorist attack, the world increasingly pays close attention to the safety problem. An intelligent safety monitoring system based on perspective analysis not only can efficiently finish a safety guarantee task, but also can greatly save manpower and material resources. Therefore, the research on the tracking of the human moving trajectory has wide application prospect. The tracking of the human moving trajectory mainly relates to the detection of the moving objects, the identification of human features and the tracking of the trajectory. The existing tracking solution only adopts an ordinary CCD camera for performing image collection, the detection of the moving objects and the identification of human features, and is easy to be affected by the factors of weather, illumination, shadows and the like, causing the situation of target loss due to false detection and missing detection. Document with patent No. US 2009/128647 A1 has disclosed a system and method for automatic image capture in a handheld camera with a multiple-axis actuating mechanism; however, it is easy to be affected by the factors of weather, illumination, shadows and the like.

### SUMMARY OF THE PRESENT INVENTION

The purpose of the present invention is to provide a method and system for tracking a moving trajectory based on human features, and the present invention is not affected by the factors of weather, illumination, shadows and the like, and has lower probability of missing detection and false detection.

To achieve the above purpose, the present invention provides a method as set forth in independent claim 1. Compared with the prior art, the present invention has the beneficial effects: 1. the zooming CCD camera is adopted, so the monitoring and tracking range is wide; 2. the intelligent analysis unit A adopts the method of extracting the moving target in a gray image sequence, and the moving target extracted by the algorithm has small distortion and low false detection rate; and the moving target extracted by the algorithm has small distortion and low false detection rate; 3. a human basic profile and features are obtained through the image analysis of the infrared thermal imager, thereby evading the situation of false detection caused by outside environmental change of weather, illumination, shadows and the like. The present invention has lower probability of generating missing detection and false detection.

### BRIEF DESCRIPTION OF THE DRAWINGS

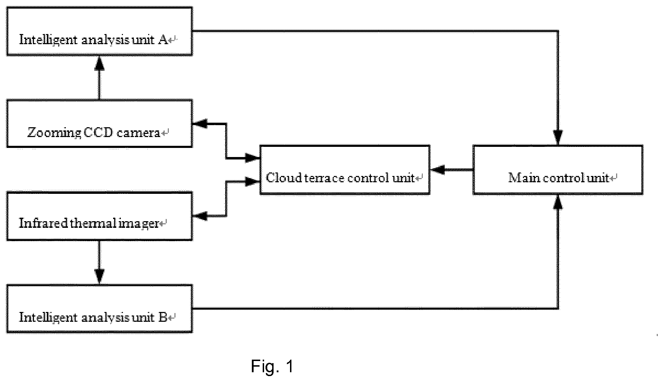

Fig. 1 is a system structure block diagram of embodiment 1 of the present invention.

### DETAILED DESCRIPTION OF THE PRESENT INVENTION

The technical solution in the embodiment of the present invention will be clearly and completely described below with combination of the embodiment and the drawing of the present invention. Apparently, the described embodiment is merely some but not all of embodiments of the present invention. On the basis of the embodiment in the present invention, all other embodiments obtained by those skilled in the art on the premise of not making any creative effort shall belong to the protection scope of the present invention.

### Embodiment 1

Please with reference to Figure 1, in the embodiment of the present invention, a system for tracking a moving trajectory based on human features consists of a zooming CCD camera, an infrared thermal imager, an intelligent analysis unit A, an intelligent analysis unit B, a cloud terrace control unit and a main control unit, wherein the zooming CCD camera captures an image and transmits the image to the intelligent analysis unit A; the infrared thermal imager captures an image and transmits the image to the intelligent analysis unit B; the intelligent analysis unit A and the intelligent analysis unit B are respectively connected with the main control unit; the main control unit is connected with the cloud terrace control unit; and the cloud terrace control unit respectively performs data interaction with the zooming CCD camera and the infrared thermal imager.

The intelligent analysis unit A comprises a human feature identifying module and a moving object detecting module.

The cloud terrace control unit can control the zooming CCD camera and the infrared thermal imager to perform 120° rotation in a vertical direction and perform 360° rotation in a horizontal direction, and can control the zooming CCD camera to perform a zooming action.

The zooming CCD camera adopts an advanced 3A technology (automatic focusing (AF), automatic exposure (AE) and automatic white balance (AWB)) to achieve that a clear image can be captured within the entire zooming range of the camera.

The infrared thermal imager uses a photoelectric technology to detect an infrared specific band signal of human heat radiation; the signal is converted into an image and a figure capable of being distinguished by human vision; and the human basic profile and the features can be obtained through the image analysis of the thermal imager, thereby evading the situation of false detection of the intelligent analysis unit A caused by outside environmental change of weather, illumination, shadows and the like.

The intelligent analysis unit B adopts edge detection in the image captured by the infrared thermal imager and detects a human boundary for evading the situation of false detection caused by outside environmental change of weather, illumination, shadows and the like.

A method for tracking a moving trajectory based on human features comprises the following steps:
step 1: an image capturing unit carried on a cloud terrace system comprising a zooming CCD camera and an infrared thermal imager; simultaneously performing image capturing on a monitoring environment by the zooming CCD camera and the infrared thermal imager; transmitting a captured image to an intelligent analysis unit A by the zooming CCD camera; and transmitting a captured image to an intelligent analysis unit B by the infrared thermal imager;
step 2: performing image algorithm analysis on the image captured by the zooming CCD camera through a human feature identifying module carried by the intelligent analysis unit A, and detecting and separating the information of a human dynamic profile, a head, hands and feet, extracting blocking features of image information and building a histogram; contrasting and matching the extracted blocking features with a human feature library by adopting a decision tree classifier; and detecting a target moving human body from the images by a moving object detecting module carried by the intelligent analysis unit A by adopting a method for extracting a moving target in a gray image sequence;
step 3: adopting edge detection in the image captured by the infrared thermal imager through the intelligent analysis unit B, and detecting a human boundary for evading the situation of false detection caused by outside environmental change of weather, illumination, shadows and the like;
step 4: obtaining analysis data in real time by a main control unit from the intelligent analysis unit A and the intelligent analysis unit B, computing the proportion of the size of the target moving human body in the size of the whole image, and a deviation angle and direction of the moving target and an optical axis, and transmitting a horizontal deviation value and a vertical deviation value for deviation from the optical axis, and a size proportion value to a cloud terrace control unit; and
step 5: controlling the horizontal angle of a cloud terrace system, the vertical angle of the cloud terrace system and the focal distance of the zooming CCD camera by the cloud terrace control unit according to the horizontal deviation value, the vertical deviation value and the size proportion value of the moving target; the cloud terrace system having sensitive response and stably adjusting the deflection angle in real time so that the moving target is always in the middle of the visual field of the zooming CCD camera, thereby realizing tracking on a human moving trajectory. The amount of rotation of a cloud terrace is crucial to the tracking of the moving target. If the rotation amplitude of the cloud terrace is excessively large, a tracked moving target may be lost in the visual field; and if the rotation amplitude of the cloud terrace is excessively small, the moving target may be lost because the moving speed of the tracked moving target cannot be caught. For those skilled in the art, it is apparent that the present invention is not limited to the details of the above-mentioned exemplary embodiment. Therefore, in every way, the embodiment shall be regarded to be demonstrative, and non-limiting. The scope of the present invention is defined by the appended claim rather than the above-mentioned illustration.

In addition, it should be appreciated that although the description is depicted according to the embodiment, not every embodiment only contains one independent technical solution. This depicting manner of the description is only for clarity. The description should be regarded as a whole by those skilled in the art, and the technical solution in each embodiment can also be appropriately combined to form other embodiments that can be understood by those skilled in the art.

## Claims

1. A method for tracking a moving trajectory based on human features, comprising the following steps:
step 1: an image capturing unit carried on a cloud terrace system comprising a zooming CCD camera and an infrared thermal imager; simultaneously performing image capturing on a monitoring environment by the zooming CCD camera and the infrared thermal imager; transmitting a captured image to an intelligent analysis unit A by the zooming CCD camera; and transmitting a captured image to an intelligent analysis unit B by the infrared thermal imager;
step 2: performing image algorithm analysis on the image captured by the zooming CCD camera through a human feature identifying module carried by the intelligent analysis unit A, and detecting and separating the information of a human dynamic profile, a head, hands and feet, extracting blocking features of image information and building a histogram; contrasting and matching the extracted blocking features with a human feature library by adopting a decision tree classifier; and detecting a target moving human body from the images by a moving object detecting module carried by the intelligent analysis unit A by adopting a method for extracting a moving target in a gray image sequence;
step 3: adopting edge detection in the image captured by the infrared thermal imager through the intelligent analysis unit B to detect a human boundary;
step 4: obtaining analysis data in real time by a main control unit from the intelligent analysis unit A and the intelligent analysis unit B, computing the proportion of the size of the target moving human body in the size of the whole image, and a deviation angle and direction of the moving target and an optical axis, and transmitting a horizontal deviation value and a vertical deviation value for deviation from the optical axis, and a size proportion value to a cloud terrace control unit; and
step 5: controlling the horizontal angle of a cloud terrace system, the vertical angle of the cloud terrace system and the focal distance of the zooming CCD camera by the cloud terrace control unit according to the horizontal deviation value, the vertical deviation value and the size proportion value of the moving target so that the moving target is always in the middle of the visual field of the zooming CCD camera, thereby realizing tracking on a human moving trajectory; wherein the cloud terrace control unit controls the zooming CCD camera and the infrared thermal imager to perform 120° rotation in a vertical direction and perform 360° rotation in a horizontal direction.

## Patentansprüche

1. Auf menschlichen Merkmalen basierendes Verfahren zum Verfolgen einer Bewegungsbahn, umfassend folgenden Schritte:
Schritt 1: eine auf einem Wolke-Terrassensystem betriebene Bildaufnahme-Einheit umfasst eine Zoom-CCD-Kamera und eine Infrarot-Wärmebildkamera; gleichzeitiges Durchführen einer Bildaufnahme in einer Überwachungsumgebung durch die Zoom-CCD-Kamera und die Infrarot-Wärmebildkamera; Übertragen eines aufgenommenen Bildes an eine intelligente Analyseeinheit A durch die Zoom-CCD-Kamera und Übertragen eines aufgenommenen Bildes an eine intelligente Analyseeinheit B durch die Infrarot-Wärmebildkamera;
Schritt 2: Durchführen einer Bildalgorithmusanalyse auf dem durch die Zoom-CCD-Kamera aufgenommenen Bild über ein durch die intelligente Analyseeinheit A getragenes Identifikationsmodul für die menschlichen Merkmale, und Erfassen und Abtrennen der Informationen eines menschlichen dynamischen Profils, eines Kopfs, der Hände und Füße, Extrahieren der Blockierungsmerkmale der Bildinformationen und Erstellen eines Histogramms;
kontrastieren und Anpassen der extrahierten Blockierungsmerkmale mit einer Menschenmerkmalbibliothek unter Annahme eines Entscheidungsbaumklassifizierer; und Erfassen eines gezielten bewegenden menschlichen Körpers aus den Bildern über ein durch die intelligente Analyseeinheit A getragenes Erfassungsmodul für bewegende Objekte unter Verwendung einer Methode zum Extrahieren eines bewegenden Ziels in einem Graubildsequenz;
Schritt 3: Verwenden der Kantenerfassung in dem durch die Infrarot-Wärmebildkamera aufgenommenen Bild über die intelligente Analyseeinheit B, um eine menschliche Grenze zu erfassen;
Schritt 4: Erhalten der Analysedaten in Echtzeit durch eine Hauptsteuereinheit von der intelligenten Analyseeinheit A und der intelligenten Analyseeinheit B, Berechnen des Anteils der Größe des gezielten bewegenden menschlichen Körpers in der Größe des gesamten Bildes sowie eines Abweichungswinkels und einer Richtung des bewegenden Ziels und einer optischen Achse, und Übertragen eines horizontalen Abweichungswerts und eines vertikalen Abweichungswerts von der optischen Achse und eines Größenanteilwerts an eine Wolkenterrassensteuereinheit; und
Schritt 5: Steuern des horizontalen Winkels eines Wolkenterrassensystems und des vertikalen Winkels des Wolkenterrassensystems und der Brennweite der Zoom-CCD-Kamera durch die Wolkenterrassensteuereinheit gemäß dem horizontalen Abweichungswert, des vertikalen Abweichungswerts und des Größenanteilwert des bewegenden Ziels, so dass das bewegende Ziel sich immer in der Mitte des Gesichtsfeldes der Zoom-CCD-Kamera befindet, während ein Verfolgen einer menschlichen Bewegungsbahn realisiert wird, wobei die Wolkenterrassensteuereinheit die Zoom-CCD-Kamera steuert.

## Revendications

1. Une méthode pour dépister une trajectoire mouvante basée sur les caractéristiques humaines, comportant les étapes suivantes:
étape 1: une unité de capture d'image portée sur un système de plate-forme du cloud comportant une caméra CCD à zoom et un imageur thermique infrarouge; exécutant simultanément la capture d'image sur un environnement sous surveillance par la caméra CCD à zoom et l'imageur thermique infrarouge; transmettant une image saisie à une unité A d'analyse intelligente par la caméra CCD à zoom; et transmettant une image saisie à une unité B d'analyse intelligente par l'imageur thermique infrarouge ;
étape 2: exécutant l'analyse algorithme d'image sur l'image saisie par la caméra CCD à zoom par le biais d'un module d'indentification de caractéristique humaine porté par l'unité A d'analyse intelligente, et détectant et séparant l'information d'un profil dynamique humain, une tête, les mains et les pieds, extrayant les caractéristiques d'information d'image et établissant un histogramme; contrastant et assortissant les caractéristiques extraites avec une bibliothèque de caractéristique humaine en adoptant un classificateur d'arbre de décision; et détectant un corps humain mouvant visé dans les images par un module de détection d'objet mouvant porté par l'unité A d'analyse intelligente en adoptant une méthode pour extraire une cible mouvante dans une séquence d'image grise ;
étape 3: adoptant la détection du bord dans l'image saisie par l'imageur thermique infrarouge par le biais de l'unité B d'analyse intelligente pour détecter une frontière humaine;
étape 4: obtenant les données d'analyse en temps réel par une unité de commande principale de l'unité A d'analyse intelligente et de l'unité B d'analyse intelligente, calculant la proportion de la taille du corps humain mouvant visé dans la taille de l'image entière, et un angle de déviation et direction de la cible mouvante et d'un axe optique, et transmettant une valeur de déviation horizontale et une valeur de déviation verticale pour la déviation de l'axe optique, et une valeur de proportion de taille à une unité de commande de plate-forme du cloud; et
étape 5: contrôlant l'angle horizontal d'un système de plate-forme du cloud, l'angle vertical du système de plate-forme du cloud et la distance focale de la caméra CCD à zoom par l'unité de commande de plate-forme du cloud selon la valeur de déviation horizontale, la valeur de déviation verticale et la valeur de proportion de taille de cible mouvante de sorte que la cible mouvante soit toujours au milieu du champ visuel de la caméra CCD à zoom, réalisant de ce fait le suivi d'une trajectoire mouvante humaine; où l'unité de commande de plate-forme du cloud contrôle la caméra CCD à zoom.
